# EUROPÄISCHE PATENTSCHRIFT

(11) **EP 0 955 503 B1**
(45) Veröffentlichungstag und Bekanntmachung des Hinweises auf die Patenterteilung: **01.09.2004**
(21) Anmeldenummer: 99810348.5
(22) Anmeldetag: 26.04.1999
(51) Int. Cl.: F24D 3/16

(54) **Deckenstrahlelement zur Beheizung oder Kühlung von Räumen**
Radiant ceiling element
Elément rayonnant de plafond

(30) Priorität: 06.05.1998 CH 101798
(43) Veröffentlichungstag der Anmeldung: 10.11.1999
(73) Patentinhaber: Raschle, Kurt, 8544 Rickenbach/Sulz (CH)
(72) Erfinder: Raschle, Kurt, 8544 Rickenbach/Sulz (CH)
(74) Vertreter: Patentanwälte Breiter + Wiedmer AG

(56) Entgegenhaltungen:
- EP-A- 0 500 978
- DE-A- 4 416 681
- DE-U- 29 801 644
- GB-A- 1 180 607

## Beschreibung

Die Erfindung bezieht sich auf ein Deckenstrahlelement zur Beheizung oder Kühlung von Räumen mittels Wärmestrahlung, welches ein Trägerprofil mit wenigstens einem längslaufenden Kanal für ein wärmespeicherndes Medium aufweist, flexible Zufuhr- und Abfuhrleitungen für das wärmespeichernde Medium umfasst und mit einer Aufhängung ausgerüstet ist.

Deckenstrahlelemente der vorstehend beschriebenen Art sind an sich bekannt. Sie bestehen aus langen, schmalen Rechteckbändem mit in Längsrichtung verlaufenden, in Abstand zueinander angeordneten Heizrohrelementen. Sie werden im oberen Bereich von Gebäuden aller Art angeordnet.

Bekannte Deckenstrahlplatten bestehen beispielsweise aus einem profilierten Stahlblech und daran befestigten Stahlrohren, welche der Aufnahme eines durchströmenden Heizmediums dienen. Zur Umhüllung einer Isolierung sind die seitlichen Ränder des Stahlblechs rechtwinklig nach oben abgekantet und durch Umbördelung zusätzlich versteift. Die Bördelung kann auch zum Niederhalten der Isolierung benutzt werden. Für die Befestigung dieser Deckenstrahlplatten und die zusätzliche Versteifung sind Aufhängequerstege in das Stahlblech eingeschweisst. An den Stirnseiten der Rohre sind Sammelkästen vorgesehen.

Deckenstrahlelemente werden insbesondere zur Beheizung von Grossräumen eingesetzt, beispielsweise in Werk-, Sport-, Ausstellungs- und Tierhaltehallen. Bei grosser Hitze können die Deckenstrahlelemente auch zur Kühlung eingesetzt werden, indem statt ein Heiz- ein Kühlmedium durch die Kanäle geleitet wird.

Die Wärmestrahlung von Deckenstrahlelementen wird erst beim Auftreffen auf einen Körper in Wärmeenergie umgesetzt. Deshalb kann die Lufttemperatur niedriger als bei einer normalen Luftheizung gehalten werden. Mit andern Worten kann die Raumluft, welche nur indirekt erwärmt wird, um etwa 2 bis 3°C kühler gehalten werden.

In der EP,B1 0371148 wird ein Verfahren und eine Vorrichtung zur Herstellung von Deckenstrahlplatten beschrieben, die jeweils aus einer Mehrzahl von in Abstand parallel zueinander verlaufenden Rohren zur Beschickung mit einem wärmeabgebenden Heizmedium und einem Strahlplattenblech zur Abgabe der von den Rohren aufgenommenen Wärme mittels Wärmestrahlung dienen. Das Strahlplattenblech weist dem Aussendurchmesser der Rohre entsprechende Ausformungen auf, in die jeweils ein Rohr eingelegt wird. Das Rohr wird mit dem Strahlplattenblech durch über seine gesamte Länge verlaufende Schweisspunkte verschweisst wird. Dies erfolgt durch Widerstandschweissung mit einzelne Schweisspunkte erzeugenden Elektroden. Zwei Elektroden greifen derart an gegenüberliegenden Seiten der Ausformung an, dass die im Querschnitt halbkreisförmige Ausformung vor und während des Schweissvorgangs zur Erzielung einer spaltfreien Anlage an der Rohroberfläche an das Rohr angepresst wird. Bei auch nur geringen Deformationen entstehen neben den Schweisspunkten den Wärmefluss herabsetzende Spalten.

Die einzelnen Strahlplattenbleche sind nach bekannten Ausführungsformen etwa 5 m lang, für lange Hallen in der Grössenordnung von 50 m Länge und 20 m Breite werden diese Strahlplattenbleche stirnseitig miteinander verschweisst. Die Rohre werden ebenfalls verschweisst oder mit an sich bekannten Steckmechanismen miteinander verbunden. Die Verlegung der Strahlplattenbleche kann in Längs- oder Querrichtung erfolgen.

Angesichts der grossen Länge der stirnseitig miteinander verbundenen Strahlplattenbleche sind wegen des grossen Temperaturkoeffizienten zwischen dem Heizmedium und der Umgebungstemperatur zu Deformationen führende Spannungen unvermeidbar. Die Folge ist zumindest ein verminderter Wirkungsgrad der Deckenstrahlheizung, die Spannungen können aber auch zu Rissen oder anderen Defekten der Anlage führen.

Der Erfinder hat sich die Aufgabe gestellt, ein Deckenstrahlelement der eingangs genannten Art zu schaffen, welches sowohl beim Heizen als auch beim Kühlen grosse Temperaturkoeffizienten ausgleicht und weitgehend spannungsund deformationsfrei bleibt. Der Wirkungsgrad der Anlage soll nicht durch Dilatationsspannungen beeinflusst werden.

Die Aufgabe wird erfindungsgemäss gelöst durch ein längslaufendes Kastenprofil des Deckenstrahlelementes aus einem im wesentlichen U-förmig ausgebildeten, nach unten offenen Tragprofil mit beidseits der nach innen umgebördelten Schenkel ausgebildeten, endständigen Auflageflächen für eine längsverschiebbare, ebene Grundplatte, welche wenigstens einen integrierten Kanal umfasst, wobei die Wärme abstrahlende Grundplatte gegenüber dem Trägerprofil thermisch isoliert ist. Spezielle und weiterbildende Ausführungsformen der Vorrichtung sind Gegenstand von abhängigen Ansprüchen.

Das erfindungsgemässe Deckenstrahlelement erlaubt ein kostengünstiges, wirtschaftliches, umweltfreundliches und energiesparendes Heizsystem für lange und/oder breite Räume mit Höhen im Bereich von 3 bis 30 m. Die Heizleistung der Grundplatte, auch Heizstrahlplatte genannt, besteht zu etwa 70% aus Wärmestrahlung. Diese wird, wie erwähnt, erst beim Auftreffen auf einen Körper (Mensch, Tier, Boden, Maschinen, Einrichtung) in Wärmeenergie umgesetzt. Diese Speicher geben dann ihrerseits Wärme durch Strahlung und Konvektion ab, sie bewirken damit ein gleichnamiges vertikales Temperaturprofil (indirekte Fussbodenheizung).

Vereinfacht ist die Wirkungsweise eines erfindungsgemässen Deckenstrahlelementes mit der Sonne vergleichbar, deren Strahlung die Erdoberfläche und damit indirekt die darüberliegenden Luftschichten erwärmt. In einem Raum wird durch das Deckenstrahlelement die Temperatur der Umgebungsflächen, speziell des Fussbodens, entscheidend angehoben. Die Luftgeschwindigkeit bleibt auf ein Minimum beschränkt.

Da die tatsächlich empfundene Temperatur des Menschen durch den Mittelwert aus Lufttemperatur und Umgebungstemperatur bestimmt wird, kann die Lufttemperatur bei gleicher Empfindungstemperatur deutlich niedriger gehalten werden als bei einer Luftheizung. Die niedrigen Temperaturen bringen erhebliche Kosten- und Energieeinsparungen und schonen die Umwelt. Die gleichmässige Wärmeverteilung ohne erzwungene Luftbewegung, Staubaufwirbelung und Geräusche gewährleistet grösste Behaglichkeit von Mensch und Tier einerseits oder optimale Bedingungen für Maschinen und Einrichtungen andererseits. In der Tierzucht können überdies minimale Krankenstände durch Allergien und Erkältungskrankheiten erzielt werden.

Das wärmespeichernde Medium ist je nach den gestellten Anforderungen zweckmässig Wasser, Wasserdampf oder Luft, wobei im Prinzip jede andere Flüssigkeit und jedes andere Gas möglich ist, sofern es eine hohe Wärmekapazität aufweist und nicht aus ökologischen oder wirtschaftlichen Überlegungen ausscheidet.

Die Heisswassertemperatur liegt vor der Wärmeabgabe in der Regel im Bereich von 80 bis 90°C, sie kann jedoch, insbesondere bei Aufrechterhaltung eines Überdrucks bis etwa 12 bar, bis 140°C gesteigert werden, falls die Infrastruktur entsprechend ausgelegt ist. Die Kaltwassertemperatur liegt vor der Wärmeaufnahme in der Regel bei 4 bis 8°C.

Von wesentlicher Bedeutung ist, dass das aus Trägerprofil und wärmestrahlender Grundplatte gebildete Kastenprofil wenigstens teilweise mit einer thermischen Isolation gefüllt ist, bevorzugt über den ganzen Querschnitt und sich über die ganze Länge erstreckend.

Der Kanal für das wärmespeichernde Medium, z.B. Heiss- oder Kaltwasser, ist in der Regel querschnittlich kreis- oder halbkreisförmig ausgebildet. Es sind jedoch auch andere geometrische Formen möglich, z.B. quadratisch, rechteckig, dreieckig, trapezförmig, hexagonal usw.

Die Grundplatte und der Kanal für das wärmespeichernde Medium sind zweckmässig thermisch gut leitend, wärmebeständig und möglichst korrosionsfrei. In erster Linie eignen sich Kupfer, Messing und Aluminiumlegierungen.

Die Grundfläche ist, insbesondere bei grosser Länge und Breite, bevorzugt nicht beidseits glatt, sondern wenigstens auf der Wärme in den Raum abstrahlenden Seite, strukturiert ausgebildet oder mit einer Prägung versehen. Dadurch wird
- die Wärme abstrahlende Oberfläche vergrössert
- bei gleicher Blechdicke die mechanische Stabilität erhöht und,
- das Schweissen der Grundplatte an das wärmemedium führende Rohr ermöglicht, die ausgleichend wirkenden Strukturierungen oder Prägungen, sind Materialreserven und verhindern beim Abkühlen Deformationen.

Die Strukturierungen und/oder Prägungen werden gezielt durch Strukturierungs- oder Prägungswalzen aufgebracht.

Die Erfindung wird anhand von in der Zeichnung dargestellten Ausführungsbeispielen, welche auch Gegenstand von abhängigen Patentansprüchen sind, näher erläutert. Es zeigen schematisch:
- Fig. 1 einen Querschnitt durch ein Deckenstrahlelement,
- Fig. 2 ein Detail im Bereich A gemäss Fig. 1,
- Fig. 2a eine Variante von Fig. 2,
- Fig. 3 ein Detail im Bereich B gemäss Fig. 1,
- Fig. 4 längslaufend aneinander gelegte Deckenstrahlelemente gemäss Fig.1,
- Fig. 5 einen Querschnitt durch eine Grundplatte mit zwei rohrförmigen Kanälen,
- Fig. 6 einen Querschnitt durch eine einstückig ausgebildete Grundplatte mit einem rohrförmigen Kanal,
- Fig. 7 eine Variante gemäss Fig. 6 mit einem halbkreisförmigen Kanal,
- Fig. 8 eine Ansicht von unten von stirnseitig verbundenen Deckenstrahlelementen,
- Fig. 9 einen Querschnitt durch vier einstückig ausgebildete Trägerprofile,
- Fig. 10 ein Schema einer Halle mit Deckenstrahlelementen, und
- Fig. 11 eine Leistungskurve eines Deckenstrahlelementes.

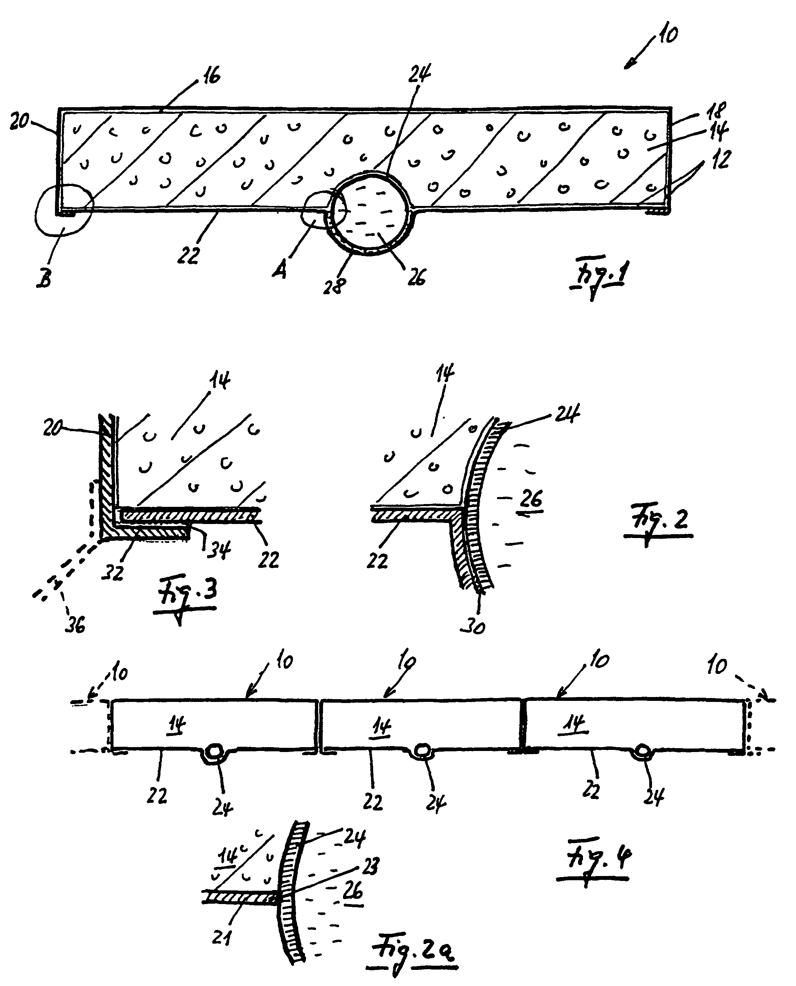

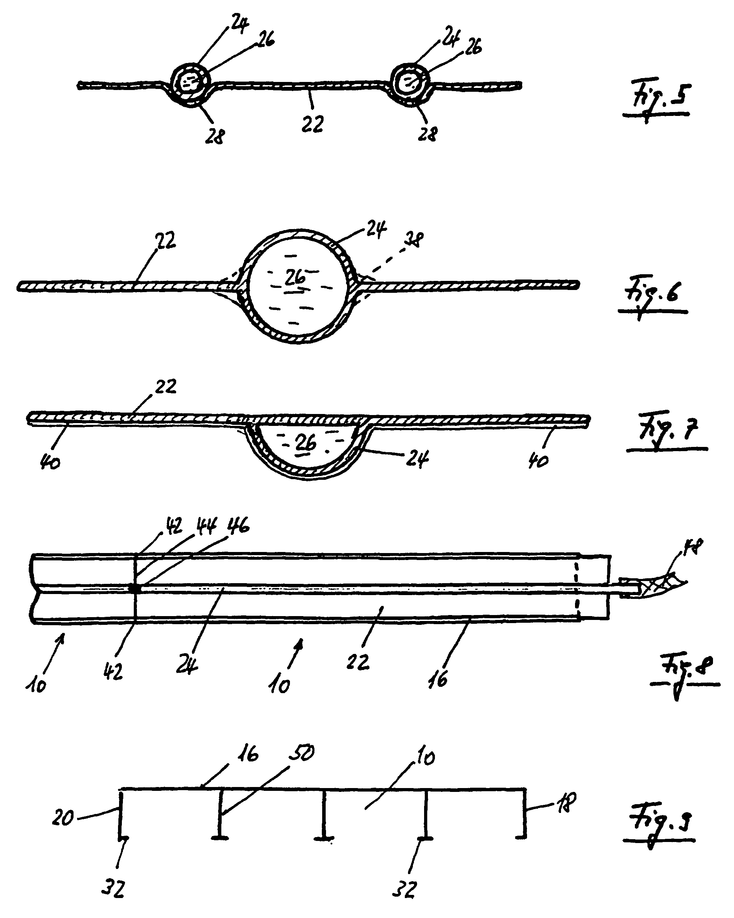

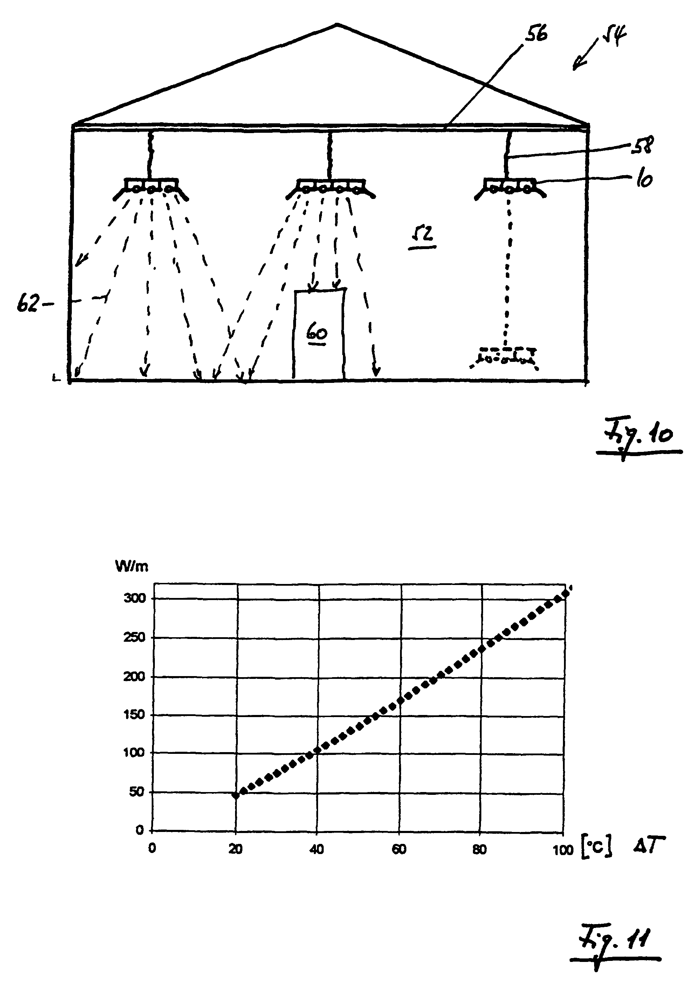

In der Ausführungsform nach Fig. 1 umfasst ein Deckenstrahlelement 10 ein längslaufendes metallisches Kastenprofil 12, welches eine thermische Isolation 14 umhüllt und so gegen mechanische und chemische Einwirkungen schützt. Das Trägerprofil 16 des Kastenprofils 12 besteht aus einem 6 m langen, vierfach rechtwinklig abgekanteten oder gerollten Stahlblech, welches aus rostfreiem Material besteht oder eine Schutzschicht aufweist. Im Querschnitt ist das Profil U-förmig ausgebildet und etwa 30 cm breit. Die beiden Schenkel 18, 20 des Trägerprofils 16 sind etwa 4 cm breit und stirnseitig rechtwinklig nach innen abgekantet, wodurch eine Auflagefläche 32 (Fig. 3) für eine Grundplatte 22 aus einem Kupferblech besteht, welches wie das Trägerprofil 16 etwa 1 mm dick ist. Im längsmittigen Bereich hat die Grundplatte 22 eine halbkreisförmige Ausformung 28. In diese ist ein aus einem Kupferrohr gebildeter Kanal 24 mit kreisförmigem Querschnitt eingelegt. Die thermische Isolation 14 weist eine entsprechende Halbkreisnut auf.

Der rohrförmige Kanal 24 für das wärmespeichernde Medium 26 ist im ausgeformten Kontaktbereich vollflächig mit der Grundplatte 22 verlötet oder thermisch leitend verklebt. Dies erlaubt einen optimalen Wärmeübergang vom Kanal 24 zu der Grundplatte 22, welche auch Strahlplatte genannt wird.

Nach einer nicht dargestellten Variante kann die Grundplatte in an sich bekannter Weise so ausgebildet sein, dass der rohrförmige Kanal 24 festgklemmt, eingeclipt oder sonstwie gehaltert wird. So ist der Kanal 24 gegenüber der Grundplatte 22 längsverschiebbar ausgebildet.

In Fig. 2, Bereich A von Fig. 1, ist die Wärmeübertragung des wärmespeichemden Mediums 26 auf den Kanal 24 aus einem Kupferrohr und von dort auf die Grundplatte 22 besser erkennbar. Die im Querschnitt halbkreisförmige Ausformung 28 der Grundplatte 22 verläuft coaxial zum rohrförmigen Kanal 26. Kanal und Ausformung der Grundplatte sind über eine vollflächige Lotschicht 30 wärmeleitend miteinander verbunden. Anstelle der Lotschicht kann auch eine vollflächige Kleberschicht mit thermisch leitenden, z.B. metallischen Partikeln aufgetragen sein, welche ebenfalls einen guten Wärmeübergang vom wärmespeichernden Medium 26 zur ebenen Grundplatte 22 gewährleistet.

Eine in Fig. 2a dargestellte Variante des Bereichs A von Fig. 1 zeigt einen direkt auf das den Kanal 24 bildende Rohr geschweissten Blechstreifen 21, welcher zusammen mit einem entsprechenden, diagonal gegenüberliegenden weiteren Blechstreifen die Grundplatte 22 (Fig. 1) bildet. Die vorzugsweise mittels Laserschweissens erzeugte Schweissnaht 23 gewährleistet eine sehr gute Wärmeübertragung.
In Fig. 3 ist ein Detail des Bereichs B von Fig. 1 dargestellt. Der Schenkel 20 des Trägerprofils 16 (Fig. 1) ist zur Bildung einer Auflagefläche 32 für die Grundplatte 22 rechtwinklig nach innen abgekantet.

Die Grundplatte 22 liegt nicht direkt auf der Auflagefläche 32, eine Isolationsschicht 34 verhindert den Wärmeübergang von der Grundplatte 22 auf das Trägerprofil 16. Diese lsolationsschicht 34 kann beispielsweise als Selbstklebeband aufgetragen oder vollflächig aufgesprüht werden. Gleichzeitig erleichtert diese lsolationsschicht 34 das erfindungswesentliche Gleiten der Grundplatte 22 auf der Auflagefläche 32.

Seitlich kann ein gestrichelt angedeuteter Abstrahlschirm 36 montiert sein, welcher eine Intensivierung der Wärmestrahlung und eine Verminderung der Wärmekonvektion bewirkt.

In Fig. 4 sind drei bis fünf längslaufend nebeneinander angeordnete Deckenstrahlelemente 10 gezeigt. Jedes der Elemente weist eine vollflächig und fest mit einem rohrförmigen Kanal 24 verbundene Grundplatte 22 auf, welche in Längsrichtung frei beweglich aufliegt und deshalb keinerlei Deformationskräften ausgesetzt ist.

In Fig. 5 ist eine Grundplatte 22 mit zwei längslaufenden, im Querschnitt halbkreisförmigen Ausformungen 28, in welche je ein coaxialer rohrförmiger Kanal 24 eingelegt und vollflächig verlötet ist. Nach weiteren Varianten könnte die Grundplatte 22 noch weitere Kanäle 24 einschliessen. Von wesentlicher Bedeutung ist bei mehr als einem Kanal pro Grundplatte, dass alle Kanäle in derselben Richtung vom gleichen Medium gleicher Temperatur durchströmt werden. Nur so können Deformationen in der Grundplatte 22 vermieden werden.

In Fig. 6 ist eine Grundplatte 22 mit einem einstückig ausgebildeten rohrförmigen Kanal 24 dargestellt. In diesem Fall ist der Wärmeübergang besonders gut gewährleistet. Die Grundplatte 22 mit Kanal 24 besteht beispielsweise aus einer stranggepressten Aluminiumlegierung.

Die Wärmeübertragung kann weiter verbessert werden, indem im Übergangsbereich vom Kanal 24 zur Grundplatte 22 gestrichelt angedeutete Materialverstärkungen oder Rippen 38 ausgebildet sind.

Die in Fig. 7 dargestellte Variante mit einem im Querschnitt halbkreisförmigen Kanal 24 hat den Vorteil, dass eine in das Kastenprofil 12 (Fig. 1) eingelegte thermische Isolation quaderförmig bleiben kann.

Fig. 7 zeigt weiter eine die Aussenseite der Grundplatte 22 und den im Querschnitt halbkreisförmigen Kanal 24 überdeckende Korrosionsschutzschicht 40, welche die Wärmeabstrahlung nicht oder nur unwesentlich behindert. Die Korrosionsschutzschicht 40 kann beispielsweise aufgespritzt oder elektrolytisch aufgebracht werden.

In Fig. 8 sind zwei stirnseitig miteinander verbundene Deckenstrahlelemente 10 gezeigt. Insgesamt sind zehn Deckenstrahlelemente von je 6 m Länge miteinander verbunden. Die Schweissnaht 42 des Trägerprofils 16 ist nur im Bereich der nach innen umgelegten Profillappen mit der innenseitigen Auflagefläche 42 sichtbar. Die Schweissnaht der Grundplatte 22 ist mit 44 bezeichnet. Die rohrförmigen Kanäle 24 sind mit einer gepressten Steckverbindung 46 verbunden oder ebenfalls verschweisst.

Am freien stirnseitigen Ende ragt die Grundplatte 22 je nach der Temperaturdifferenz zwischen wärmespeicherndem Medium und Raumtemperatur mehr oder weniger aus dem Trägerprofil heraus, beispielsweise 1 bis 2 cm. Es ist offensichtlich, dass damit dank der erfindungsgemässen Lösung mit der im Trägerprofil 16 in Längsrichtung gleitenden Grundplatte 22 nachteilige und schädliche Deformationen verhindert werden können.

Der rohrförmige Kanal 24 ist bezüglich der Grundplatte 22 überstehend ausgebildet, damit in an sich bekannter Weise eine flexible Zufuhr- oder Abfuhrleitung 48 angeschlossen werden kann.

In Fig. 9 ist ein Trägerprofil 16 aus einer stranggepressten Metallegierung, beispielsweise aus Aluminium oder einer Aluminiumlegierung, dargestellt. Durch die Ausbildung von drei Stegen 50 werden vier Kammern, eigentliche Deckenstrahlelemente 10, gebildet. Endständige, rechtwinklig abstehende Profilfahnen an den Schenkeln 18, 20 und den Stegen 50 bilden die Auflageflächen 32 für die Grundplatten 22 (Fig. 3).

Anstelle eines stranggepressten Metallprofils 16 kann gemäss Fig. 9 auch ein gespritztes oder extrudiertes Profil aus einem temperaturbeständigen, mechanisch festen Kunststoff ausgebildet sein, beispielsweise aus Polyäthylen.

In einem Raum 52 einer Halle 54 sind gemäss Fig. 10 an einem I-Querträger 56 drei Deckenheizungen mit je drei bzw. vier Deckenstrahlelementen 10 aufgehängt. Die Aufhängungen 58 sind längsverstellbar. Zum Reinigen oder Reparieren können die Deckenstrahlelemente 10 auf Arbeitshöhe abgesenkt und dann wieder aufgezogen werden.

Die Wärmestrahlung 62 ist gestrichelt angedeutet. Wo sich kein Mensch, Tier oder Gegenstand 60 befindet, trifft die Wärmestrahlung 62 auf die Wände oder den Boden auf und erwärmt diese.

In Fig. 11 ist die Wärmeleistung pro Laufmeter in Funktion der Temperaturdifferenz ΔT aufgetragen. Bei einer Temperaturdifferenz ΔT unterhalb 20°C ist keine nennenswerte Wärmeleistung festzustellen. Bei grösseren Temperatur-Temperaturdifferenzen ΔT steigt die Wärmeleistung pro Laufmeter nahezu linear, jedoch zunehmend überproportional, an.

Die Temperaturdifferenz ΔT berechnet sich aus der halben Summe von Vorlauftemperatur und Rücklauftemperatur, vermindert um die Raumtemperatur.

## Patentansprüche

1. Deckenstrahlelement (10) zur Beheizung oder Kühlung von Räumen (52) mittels Wärmestrahlung (62), welches ein Trägerprofil (16) und wenigstens einen längslaufenden Kanal (24) für ein wärmespeicherndes Medium (26) aufweist, flexible Zufuhr- und Abfuhrleitungen (48) für das wärmespeichernde Medium (26) umfasst und mit einer Aufhängung (58) ausgerüstet ist,
**gekennzeichnet durch**
ein längslaufendes Kastenprofil (12) des Deckenstrahlelementes (10) aus einem im wesentlichen U-förmig ausgebildeten, nach unten offenen Trägerprofil (16) mit beidseits der nach innen umgebördelten Schenkel (18,20) ausgebildeten, endständigen Auflageflächen (32) für eine längsverschiebbare, ebene Grundplatte (22), welche wenigstens einen wärmeleitend integrierten Kanal (24) umfasst, wobei die Wärme abstrahlende Grundplatte (22) gegenüber dem Trägerprofil (16) thermisch isoliert ist.

2. Deckenstrahlelement (10) nach Anspruch 1, **dadurch gekennzeichnet, dass** das Kastenprofil (12) wenigstens teilweise mit einer thermischen Isolation (14) gefüllt ist.

3. Deckenstrahlelement (10) nach Anspruch 1 oder 2, **dadurch gekennzeichnet, dass** der Kanal (24) für das wärmespeichernde Medium (26) rohrförmig ausgebildet ist, vorzugsweise mit kreisförmigem oder halbkreisförmigem Querschnitt, und eine vollflächige, thermisch gut leitende Verbindung zur in diesem Bereich entsprechend geformten Grundplatte (22) aufweist.

4. Deckenstrahlelement (10) nach Anspruch 2 oder 3, **dadurch gekennzeichnet, dass** der Kanal (24) längsverschiebbar in die entsprechend geformte Grundplatte (22) geklemmt ist, oder zwischen dem Kanal (24) und der Grundplatte (22) eine Lot- oder Kleberschicht (30) aufgetragen ist, wobei diese vorzugsweise metallhaltig ist.

5. Deckenstrahlelement (10) nach einem der Ansprüche 1 bis 4, **dadurch gekennzeichnet, dass** Kanal (24) und Grundplatte (22) einstückig ausgebildet sind oder beidseits des Kanals (24) die Grundplatte (22) bildende Blechstreifen (21) angeschweisst sind.

6. Deckenstrahlelement (10) nach einem der Ansprüche 1 bis 5, **dadurch gekennzeichnet, dass** Kanal (24) und Grundplatte (22), insbesondere aus Kupfer, Messing, Aluminium oder einer Aluminiumlegierung, vorzugsweise aussenseitig eine Korrosionsschutzschicht (40) aufweisen, welche die Wärmeabstrahlung (62) nicht oder nur unwesentlich behindert.

7. Deckenstrahlelement (10) nach einem der Ansprüche 1 bis 6, **dadurch gekennzeichnet, dass** die Grundplatte (22) wenigstens auf der Wärme abstrahlenden Seite strukturiert ausgebildet und/oder mit Prägungen versehen ist.

8. Deckenstrahlelement (10) nach einem der Ansprüche 1 bis 7, **dadurch gekennzeichnet dass** die Auflageflächen (32) des Trägerprofils (16) eine bandförmige oder aufgesprühte lsolationsschicht (34) aufweisen, welche vorzugsweise auch den Gleitwiderstand der Grundplatte (22) in Längsrichtung erniedrigt.

9. Deckenstrahlelement (10) nach einem der Ansprüche 1 bis 8, **dadurch gekennzeichnet, dass** das Trägerprofil (16) aus einem querschnittlich U-förmig abgekanteten oder abgebogenen Metallblech, aus einem stranggepressten Metallprofil oder aus einem gespritzen oder extrudierten Kunststoffprofil besteht, wobei die Schenkelenden zur Bildung der Auflagefläche (32) für die Grundplatte (22) nach innen abgewinkelt sind.

10. Deckenstrahlelement (10) nach Anspruch 9, **dadurch gekennzeichnet, dass** das einstückige Trägerprofil (16) mehrere Kammern für je eine Grundplatte (22) umfasst.

## Claims

1. Radiant ceiling element (10) for heating or cooling spaces (52) by means of heat radiation (62), which has a carrier profile (16) and at least one longitudinally extending channel (24) for a heat storing medium (26), comprises flexible feed and discharge lines (48) for the heat storing medium (26) and is equipped with a suspension device (58), **characterised by** a longitudinally extending box profile (12) of the radiant ceiling element (10) made of a carrier profile (16) formed substantially in a U-shape and open at the bottom with support faces (32) on the end formed on either side of the legs (18, 20), which are flanged to the inside, for a longitudinally displaceable, level base plate (22) which comprises at least one channel (24) integrated in a heat conducting manner, the heat radiating base plate (22) being thermally insulated with respect to the carrier profile (16).

2. Radiant ceiling element (10) according to claim 1, **characterised in that** the box profile (12) is at least partially filled with a thermal insulation (14).

3. Radiant ceiling element (10) according to claim 1 or 2, **characterised in that** the channel (24) for the heat-storing medium (26) is tubular in design, preferably with a circular or semi-circular cross-section, and an all-over, good heat conducting connection to the base plate (22) formed correspondingly in this region.

4. Radiant ceiling element (10) according to claim 2 or 3, **characterised in that** the channel (24) is damped so as to be longitudinally displaceable into the correspondingly formed base plate (22), or a soldering or adhesive layer (30) is applied between the channel (24) and the base plate (22), this layer preferably containing metal.

5. Radiant ceiling element (10) according to any one of claims 1 to 4, **characterised in that** the channel (24) and base plate (22) are integrally formed or sheet metal strips (21) forming the base plate are welded on on either side of the channel (24).

6. Radiant ceiling element (10) according to any one of claims 1 to 5, **characterised in that** the channel (24) and base plate (22), in particular made of copper, brass, aluminium or an aluminium alloy, preferably have an anti-corrosion layer (40) on the outside, which does not impede, or only insubstantially, the heat radiation (62).

7. Radiant ceiling element (10) according to any one of claims 1 to 6, **characterised in that** the base plate (22) is structured in design at least on the side radiating heat and/or is provided with embossings.

8. Radiant ceiling element (10) according to any one of claims 1 to 7, **characterised in that** the support faces (32) of the carrier profile (16) have a strip-shaped or sprayed-on insulation layer (34) which preferably also lowers the slip resistance of the base plate (22) in the longitudinal direction.

9. Radiant ceiling element (10) according to any one of claims 1 to 8, **characterised in that** the carrier profile (16) consists of a cross-sectionally U-shaped folded or bent metal sheet, made of an extruded metal profile or made of an injection-moulded or extruded plastics material profile, the leg ends being angled to the inside to form the support face (32) for the base plate (22).

10. Radiant ceiling element (10) according to claim 9, **characterised in that** the integral carrier profile (16) comprises a plurality of chambers, each for one base plate (22).

## Revendications

1. Elément rayonnant de plafond (10), destiné au chauffage ou au rafraîchissement de locaux (52) par rayonnement thermique, qui comporte un profilé de support (16) et au moins un canal longitudinal (24) pour un fluide (26) accumulateur de chaleur, qui inclut des conduites souples (48) d'alimentation et d'évacuation du fluide (26) accumulateur de chaleur, et qui est équipé d'un dispositif de suspension (58), **caractérisé par** un profilé-caisson (12) longitudinal qui fait partie de l'élément rayonnant de plafond (10) et qui est constitué d'un profilé de support (16) essentiellement en forme de U, ouvert vers le bas, et comportant au bout des deux côtés des ailes (18, 20) repliées vers l'intérieur des surfaces d'appui (32) pour une plaque de fond (22) plane et mobile dans le sens longitudinal qui inclut au moins un canal (24) intégré de façon thermoconductrice, cette plaque de fond (22) - qui émet de la chaleur par rayonnement - étant calorifugée par rapport au profilé de support (16).

2. Elément rayonnant de plafond (10) selon la revendication 1, **caractérisé en ce que** le profilé-caisson (12) est rempli au moins partiellement d'un isolant thermique (14).

3. Elément rayonnant de plafond (10) selon la revendication 1 ou 2, **caractérisé en ce que** le canal (24) pour le fluide (26) accumulateur de chaleur est de forme tubulaire, de préférence de section circulaire ou semi-circulaire, et **en ce que** ce canal est solidarisé sur toute sa surface, par un moyen fortement thermoconducteur, avec la plaque de fond (22) qui, dans cette zone, est façonnée en conséquence.

4. Elément rayonnant de plafond (10) selon la revendication 2 ou 3, **caractérisé en ce que** le canal (24) est encastré mobile dans le sens longitudinal dans la plaque de fond (22) qui est façonnée en conséquence, ou **en ce qu'**il est appliqué, entre le canal (24) et la plaque de fond (22), une couche de brasure ou une couche de matière adhésive, cette dernière incluant de préférence un composant métallique.

5. Elément rayonnant de plafond (10) selon l'une quelconque des revendications 1 à 4, **caractérisé en ce que** le canal (24) et la plaque de fond (22) sont réalisés en un seul bloc ou **en ce que** des bandes de tôle (21) constituant la plaque de fond (22) sont soudées sur les deux côtés du canal (24).

6. Elément rayonnant de plafond (10) selon l'une quelconque des revendications 1 à 5, **caractérisé en ce que** le canal (24) et la plaque de fond (22), en particulier lorsqu'ils sont en cuivre, laiton, aluminium ou un alliage d'aluminium, comportent de préférence sur leur côté extérieur un revêtement anticorrosif qui ne gêne en rien ou seulement de façon insignifiante le rayonnement de chaleur (62).

7. Elément rayonnant de plafond (10) selon l'une quelconque des revendications 1 à 6, **caractérisé en ce que** la plaque de fond (22) est, au moins du côté qui dégage la chaleur par rayonnement, de configuration structurée ou pourvue d'un matriçage.

8. Elément rayonnant de plafond (10) selon l'une quelconque des revendications 1 à 7, **caractérisé en ce que** les surfaces d'appui (32) du profilé de support (16) comportent un revêtement isolant (34) sous forme de bande ou appliqué par pulvérisation qui, de préférence, diminue aussi la résistance au glissement de la plaque de fond (22) dans la direction longitudinale.

9. Elément rayonnant de plafond (10) selon l'une quelconque des revendications 1 à 8, **caractérisé en ce que** le profilé de support (16) est constitué d'une feuille métallique repliée ou incurvée en forme de U, d'un profilé métallique extrudé ou d'un profilé en matière plastique moulé ou extrudé, les extrémités des ailes étant repliées vers l'intérieur afin de former la surface d'appui (32) pour la plaque de fond (22).

10. Elément rayonnant de plafond (10) selon la revendication 9, **caractérisé en ce que** le profilé de support (16) réalisé en monobloc inclut plusieurs compartiments recevant chacun une plaque de fond (22).
